# EUROPEAN PATENT APPLICATION

(11) **EP 4 394 934 A1**
(43) Date of publication of application: **03.07.2024**
(21) Application number: 22860929.3
(22) Date of filing: 10.06.2022
(51) Int. Cl.: H01M 4/38, H01M 10/0562

(54) **NEGATIVE ELECTRODE ACTIVE SUBSTANCE AND LITHIUM-ION BATTERY**

(30) Priority: 27.08.2021 JP 2021138760
(71) Applicant: Panasonic Intellectual Property Management Co., Ltd., Osaka-shi, Osaka 540-6207 (JP)
(72) Inventor: ASANO, Kazuko, Kadoma-shi, Osaka 571-0057 (JP); OKI, Yukihiro, Kadoma-shi, Osaka 571-0057 (JP); HIBINO, Mitsuhiro, Kadoma-shi, Osaka 571-0057 (JP); TAKEDA, Nanami, Kadoma-shi, Osaka 571-0057 (JP)
(74) Representative: Novagraaf International SA
(86) International application number: PCT/JP2022/023408
(87) International publication number: WO 2023/026635

(57) **Abstract**

Provided are: a negative electrode active substance having a La₃Ni₂Sn₇ crystal structure and a high gravimetric energy density; and a lithium-ion battery using the same. The negative electrode active material according to one embodiment of the present disclosure is included in the negative electrode of a lithium-ion battery, and is represented by general formula M₃Me₂X₇ (where: M includes La and/or Ca; Me includes at least one element selected from the group consisting of Mn, Ni, Fe and Co; X includes at least one element selected from the group consisting of Ge, Si, Sn, and Al). The dislocation density of the negative electrode active material is at least 1 × 10¹⁵ cm⁻².

## Description

### TECHNICAL FIELD

The present disclosure relates to a negative electrode active material and a lithium-ion battery.

### BACKGROUND ART

Lithium-ion batteries in which charge and discharge are performed by transfer of lithium ions (Li ions) between a positive electrode and a negative electrode have been widespread. For a negative electrode active material included in the negative electrode in the lithium-ion battery, Si, which has a higher capacity than graphite, has been used in addition to graphite in recent years. However, Si has a problem of large volumetric change during charge and discharge, which easily decreases a battery capacity due to repeated charge and discharge.

Accordingly, various alloys other than Si have been investigated as the negative electrode active material of the lithium-ion battery having a high capacity. For example, Patent Literature 1 describes that an alloy having a La₃Ni₂Sn₇-type crystal structure is used as the negative electrode active material.

### CITATION LIST

### NON PATENT LITERATURE

NON PATENT LITERATURE 1: Shinsuke Matsuno et al, La3Ni2Sn7 Ternary Intermetallic Phase for Lithium Insertion and Deinsertion, Electrochemical and Solid-State Letters, volume 8 (4), A234-A236, (2005).

### SUMMARY

### TECHNICAL PROBLEM

However, an alloy having the La₃Ni₂Sn₇-type crystal structure described in Non Patent Literature 1 has a higher volume energy density but a lower weight energy density than graphite.

It is an advantage of the present disclosure to provide a negative electrode active material having a high weight energy density while having the La₃Ni₂Sn₇-type crystal structure, and a lithium-ion battery using the same.

### SOLUTION TO PROBLEM

A negative electrode active material of an aspect of the present disclosure is a negative electrode active material included in a negative electrode of a lithium-ion battery, wherein the negative electrode active material is represented by the general formula M₃Me₂X₇, wherein M includes at least one of the group consisting of La and Ca, Me includes at least one element selected from the group consisting of Mn, Ni, Fe, and Co, and X includes at least one element selected from the group consisting of Ge, Si, Sn, and Al, and a dislocation density of the negative electrode active material is greater than or equal to 1×10¹⁵ cm⁻².

A lithium-ion battery of an aspect of the present disclosure comprises: a negative electrode including the above negative electrode active material; a positive electrode; and a non-aqueous electrolyte.

### ADVANTAGEOUS EFFECT OF INVENTION

According to the negative electrode active material of the present disclosure, the weight energy density may be increased.

### BRIEF DESCRIPTION OF DRAWING

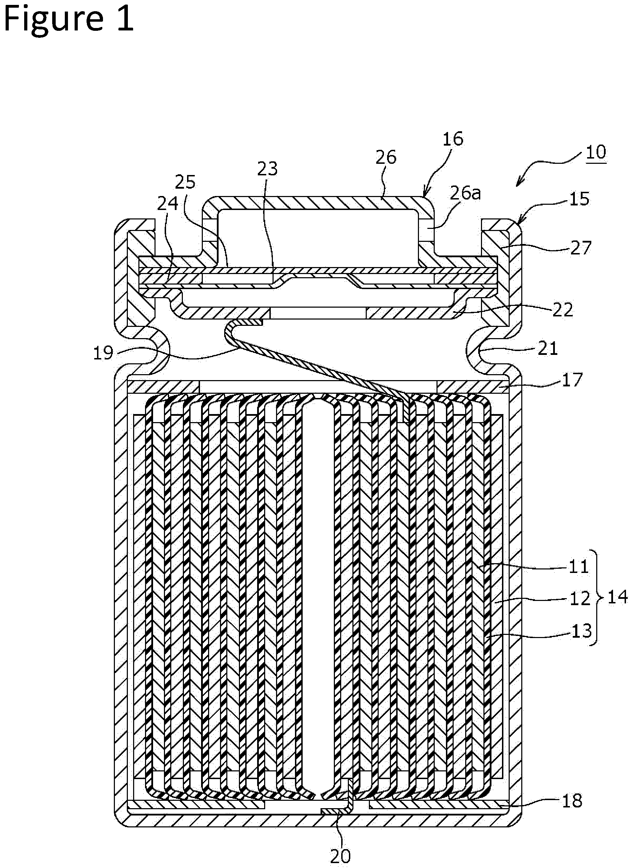

FIG. 1 is a vertical cross-sectional view of a cylindrical lithium-ion battery of an example of an embodiment.

### DESCRIPTION OF EMBODIMENTS

To increase a capacity of a lithium-ion battery, a negative electrode active material in which Si is mixed with graphite is used. However, Si is expensive, and containing Si may deteriorate cycle characteristics of the lithium-ion battery. Thus, various alloys other than Si have attracted attention as the negative electrode active material. For example, Patent Literature 1 discloses an alloy having a La₃Ni₂Sn₇-type crystal structure as a negative electrode active material of a lithium-ion battery having a high capacity. However, the alloy disclosed in Patent Literature 1 has a higher volume energy density but a lower weight energy density than graphite. The present inventors have made intensive investigation, and consequently found that the weight energy density may be increased by setting a dislocation density of a negative electrode active material to greater than or equal to 1×10¹⁵ cm⁻². Since the dislocation is formed from defects, voids, and the like, it is presumed that defects, voids, and the like are formed in the large crystal structure having a dislocation density of greater than or equal to 1×10¹⁵ cm⁻², and Li ions are inserted into these defects, voids, and the like.

Hereinafter, an example of embodiments of the negative electrode active material according to the present disclosure, and the lithium-ion battery using the above negative electrode active material will be described in detail. In the lithium-ion battery, lithium ions are transferred between a positive electrode and a negative electrode to perform charge and discharge. Hereinafter, a cylindrical battery in which a wound electrode assembly is housed in a bottomed cylindrical exterior housing can will be exemplified, but the exterior is not limited to the cylindrical exterior housing can, and may be, for example, a rectangular exterior housing can, or may also be an exterior composed of laminated sheets including a metal layer and a resin layer. The electrode assembly may be a stacked electrode assembly in which a plurality of positive electrodes and a plurality of negative electrodes are alternately stacked via separators. In addition, a liquid non-aqueous electrolyte will be exemplified hereinafter, but the non-aqueous electrolyte is not limited to liquid, and may be solid.

FIG. 1 is a vertical cross-sectional view of a cylindrical lithium-ion battery 10 of an example of an embodiment. In the lithium-ion battery 10 illustrated in FIG. 1, an electrode assembly 14 and a non-aqueous electrolyte (not illustrated) are housed in an exterior 15. The electrode assembly 14 has a wound structure in which a positive electrode 11 and a negative electrode 12 are wound via a separator 13. As a solvent (organic solvent) of the non-aqueous electrolyte, carbonates, lactones, ethers, ketones, esters, and the like may be used, and two or more of these solvents may be mixed for use. When two or more of the solvents are mixed for use, a mixed solvent including a cyclic carbonate and a chain carbonate is preferably used. For example, ethylene carbonate (EC), propylene carbonate (PC), butylene carbonate (BC), or the like may be used as the cyclic carbonate, and dimethyl carbonate (DMC), ethyl methyl carbonate (EMC), diethyl carbonate (DEC), or the like may be used as the chain carbonate. As an electrolyte salt of the non-aqueous electrolyte, LiPF₆, LiBF₄, LiCF₃SO₃, or the like, and a mixture thereof may be used. An amount of the electrolyte salt to be dissolved in the solvent may be, for example, greater than or equal to 0.5 mol/L and less than or equal to 2.0 mol/L. Hereinafter, for convenience of description, the side of a sealing assembly 16 will be described as the "upper side", and the bottom side of the exterior 15 will be described as the "lower side".

The opening end of the exterior 15 is capped with the sealing assembly 16 to seal an inside of the lithium-ion battery 10. Insulating plates 17 and 18 are provided on the upper and lower sides of the electrode assembly 14, respectively. A positive electrode lead 19 extends upward through a through hole of the insulating plate 17, and is welded with the lower face of a filter 22, which is a bottom plate of the sealing assembly 16. In the lithium-ion battery 10, a cap 26, which is a top plate of the sealing assembly 16 electrically connected to the filter 22, becomes a positive electrode terminal. On the other hand, a negative electrode lead 20 extends through a through hole of the insulating plate 18 toward the bottom side of the exterior 15, and is welded with a bottom inner face of the exterior 15. In the lithium-ion battery 10, the exterior 15 becomes a negative electrode terminal. When the negative electrode lead 20 is provided on the end, the negative electrode lead 20 extends through an outside of the insulating plate 18 toward the bottom side of the exterior 15, and is welded with the bottom inner face of the exterior 15.

The exterior 15 is, for example, a bottomed cylindrical metallic exterior housing can. A gasket 27 is provided between the exterior 15 and the sealing assembly 16 to achieve sealability inside the lithium-ion battery 10. The exterior 15 has a grooved portion 21 formed by, for example, pressing the side wall thereof from the outside to support the sealing assembly 16. The grooved portion 21 is preferably formed in a circular shape along a circumferential direction of the exterior 15, and supports the sealing assembly 16 via the gasket 27 with the upper face thereof.

The sealing assembly 16 has the filter 22, a lower vent member 23, an insulating member 24, an upper vent member 25, and the cap 26, which are stacked in this order from the electrode assembly 14 side. Respective members constituting the sealing assembly 16 have, for example, a disk shape or a ring shape, and the members except for the insulating member 24 are electrically connected to each other. The lower vent member 23 and the upper vent member 25 are connected to each other at each of the centers, and the insulating member 24 is interposed between the circumferences. If the internal pressure of the battery increases due to abnormal heat generation, for example, the lower vent member 23 breaks and thereby the upper vent member 25 expands toward the cap 26 side to be separated from the lower vent member 23, resulting in breakage of electrical connection between both the members. If the internal pressure further increases, the upper vent member 25 breaks, and gas is discharged through an opening 26a of the cap 26.

Hereinafter, the positive electrode 11, the negative electrode 12, and the separator 13, which constitute the electrode assembly 14, particularly a negative electrode active material to constitute the negative electrode 12, will be described in detail.

### [Positive Electrode]

The positive electrode 11 has, for example, a positive electrode core and a positive electrode mixture layer provided on a surface of the positive electrode core. For the positive electrode core, a foil of a metal stable within a potential range of the positive electrode 11, such as aluminum, a film in which such a metal is disposed on a surface layer thereof, and the like may be used. A thickness of the positive electrode core is, for example, greater than or equal to 10 µm and less than or equal to 30 µm. The positive electrode mixture layer includes a positive electrode active material, a binder, and a conductive agent, and is preferably provided on both surfaces of the positive electrode core except for a portion to which the positive electrode lead 19 is to be connected. The positive electrode 11 may be produced by, for example, applying a positive electrode mixture slurry including the positive electrode active material, the binder, the conductive agent, and the like on the surface of the positive electrode core, and drying and subsequently compressing the applied film to form the positive electrode mixture layers on both the surfaces of the positive electrode core.

The positive electrode active material includes a lithium-transition metal oxide as a main component. The positive electrode active material may be composed of substantially only the lithium-transition metal oxide, and particles of an inorganic compound, such as aluminum oxide and a lanthanoid-containing compound, may adhere to particle surfaces of the lithium-transition metal oxide. The lithium-transition metal oxide may be used singly, or may be used in combination of two or more thereof.

Examples of a metal element contained in the lithium-transition metal oxide include nickel (Ni), cobalt (Co), manganese (Mn), aluminum (Al), boron (B), magnesium (Mg), titanium (Ti), vanadium (V), chromium (Cr), iron (Fe), copper (Cu), zinc (Zn), gallium (Ga), strontium (Sr), zirconium (Zr), niobium (Nb), indium (In), tin (Sn), tantalum (Ta), and tungsten (W). A preferable example of the lithium-transition metal oxide is a composite oxide represented by the general formula: Li_{α}NiₓM₍₁₋ₓ₎O₂ (0.1≤α≤1.2, 0.3≤x<1, and M includes at least one selected from the group consisting of Co, Mn, and Al).

Examples of the conductive agent included in the positive electrode mixture layer may include a carbon material such as carbon black, acetylene black, Ketjenblack, carbon nanotube, carbon nanofiber, and graphite. Examples of the binder included in the positive electrode mixture layer may include a fluororesin such as polytetrafluoroethylene (PTFE) and polyvinylidene fluoride (PVDF), polyacrylonitrile (PAN), a polyimide resin, an acrylic resin, and a polyolefin resin. With these resins, cellulose derivatives such as carboxymethylcellulose (CMC) or a salt thereof, polyethylene oxide (PEO), and the like may be used in combination.

### [Negative Electrode]

The negative electrode 12 has, for example, a negative electrode core and a negative electrode mixture layer provided on a surface of the negative electrode core. For the negative electrode core, a foil of a metal stable within a potential range of the negative electrode 12, such as copper, a film in which such a metal is disposed on a surface layer thereof, and the like may be used. A thickness of the negative electrode core is, for example, greater than or equal to 5 µm and less than or equal to 15 µm. The negative electrode mixture layer includes a negative electrode active material and a binder, and is preferably provided on, for example, both surfaces of the negative electrode core except for a portion to which the negative electrode lead 20 is to be connected. The negative electrode 12 may be produced by, for example, applying a negative electrode mixture slurry including the negative electrode active material, the binder, the conductive agent, and the like on the surface of the negative electrode core, and drying and subsequently compressing the applied film to form the negative electrode mixture layers on both the surfaces of the negative electrode core. As for the negative electrode 12, the negative electrode active material and a cupper powder may be mixed and then compressed to form a pellet.

The negative electrode active material included in the negative electrode 12 includes an alloy represented by the general formula M₃Me₂X₇, wherein M includes at least one of the group consisting of La and Ca, Me includes at least one element selected from the group consisting of Mn, Ni, Fe, and Co, and X includes at least one element selected from the group consisting of Ge, Si, Sn, and Al (hereinafter, which may be referred to as the M₃Me₂X₇-type alloy). The M₃Me₂X₇-type alloy is La₃Ni₂Sn₇, for example. The negative electrode 12 may include a negative electrode active material other than the M₃Me₂X₇-type alloy. The negative electrode active material other than the M₃Me₂X₇-type alloy is not particularly limited as long as it may reversibly occlude and release lithium ions, and for example, graphite (natural graphite or artificial graphite), a metal to form an alloy with lithium, such as silicon (Si) and tin (Sn), or an oxide including a metal element such as Si and Sn may be used.

A dislocation density of the M₃Me₂X₇-type alloy is, for example, greater than or equal to 1×10¹⁵ cm⁻². According to this, a weight energy density of the M₃Me₂X₇-type alloy may be increased. The dislocation density of the M₃Me₂X₇-type alloy is preferably greater than or equal to 1×10¹⁷ cm⁻², and more preferably greater than or equal to 1×10¹⁹ cm⁻². The dislocation density may be calculated by, for example, observing a cross section of the M₃Me₂X₇-type alloy by using a transmission electron microscope (TEM). Note that, a dislocation density of a common M₃Me₂X₇-type alloy is approximately greater than or equal to 1×10⁶ and less than or equal to 1×10⁸, and the dislocation density of the M₃Me₂X₇-type alloy according to the present disclosure is higher than the dislocation density of the common M₃Me₂X₇-type alloy.

A median diameter (D50) on a volumetric basis of the M₃Me₂X₇-type alloy may be, for example, greater than or equal to 0.1 µm and less than or equal to 50 µm, or may be greater than or equal to 1 µm and less than or equal to 10 µm. The D50 of the M₃Me₂X₇-type alloy may be reduced by crushing with a ball mill, for example, and may be regulated with the crushing conditions. The D50 means a particle diameter at which a cumulative frequency is 50% from a smaller particle diameter side in a particle size distribution on a volumetric basis. The particle size distribution of the M₃Me₂X₇-type alloy may be measured by using a laser diffraction-type particle size distribution measuring device (for example, MT3000II, manufactured by MicrotracBEL Corp.) with water as a dispersion medium.

The M₃Me₂X₇-type alloy according to the present disclosure may be produced as follows, for example.

### <Method for Producing M₃Me₂X₇-Type Alloy>

(1) An M metal, an Me metal, and an X metal are prepared as raw materials, these raw materials are mixed at a predetermined ratio, and then subjected to arc melting to produce a lump of the M₃Me₂X₇-type alloy.
(2) The produced lump of the M₃Me₂X₇-type alloy is vacuum-sealed in a quartz tube, and then annealed in an annealing furnace. Conditions of the annealing are, for example, an annealing temperature of greater than or equal to 400°C and less than or equal to 1000°C and a holding time of greater than or equal to 10 hours and less than or equal to 720 hours.
(3) The annealed lump of M₃Me₂X₇-type alloy is subjected to a crushing treatment with, for example, a mortar or a planetary ball mill. Conditions of the ball-mill treatment is, for example, a rotation rate of greater than or equal to 100 rpm and less than or equal to 500 rpm and a treating time of greater than or equal to 1 hour and less than or equal to 720 hours.
(4) The M₃Me₂X₇-type alloy after the ball-mill treatment is classified with, for example, a mesh to remove coarse particles.

The M₃Me₂X₇-type alloy produced by the above producing method has a dislocation density of greater than or equal to 1×10¹⁵ cm⁻². It is considered that the crushing forms defects, voids, and the like in the crystal structure of the M₃Me₂X₇-type alloy to increase the dislocation density of the M₃Me₂X₇-type alloy.

For the binder included in the negative electrode mixture layer, a fluororesin, PAN, a polyimide resin, an acrylic resin, a polyolefin resin, and the like may be used as in the case of the positive electrode 11. When the mixture slurry is prepared by using an aqueous solvent, CMC or a salt thereof, styrene-butadiene rubber (SBR), polyacrylic acid (PAA) or a salt thereof, polyvinyl alcohol, and the like are preferably used.

The negative electrode mixture layer may include a conductive agent. The conductive agent may uniformize a conductive path. Examples of the conductive agent included in the negative electrode mixture layer include carbon-based particles such as carbon black (CB), acetylene black (AB), Ketjenblack, carbon nanotube (CNT), graphene, and graphite. These may be used singly, or may be used in combination of two or more thereof. The conductive agent preferably includes CNT. CNT may be any of single-wall carbon nanotube (SWCNT) and multiwall carbon nanotube (MWCNT). Since SWCNT may form the conductive path in the negative electrode mixture layer at a smaller amount than MWCNT, CNT preferably includes SWCNT.

### [Separator]

For the separator 13, a porous sheet having an ion permeation property and an insulation property is used. Specific examples of the porous sheet include a fine porous thin film, a woven fabric, and a nonwoven fabric. As a material of the separator 13, a olefin resin such as polyethylene and polypropylene, cellulose, and the like are preferable. The separator 13 may have any of a single-layered structure and a multilayered structure. On a surface of the separator 13, a heat-resistant layer including a heat-resistance material may be formed. Examples of the heat-resistant material may include: polyamide resins, such as an aliphatic polyamide and an aromatic polyamide (aramid); and polyimide resins, such as a polyamideimide and a polyimide.

### EXAMPLES

Hereinafter, the present disclosure will be further described with Examples, but the present disclosure is not limited to these Examples.

### <Example 1>

### [Production of Negative Electrode Active Material]

As raw materials, a metal piece of La, a Ni wire, and a metal piece of Sn were used. As the metal piece of La, a metal piece made of yttrium with purity 3N was subjected to arc melting once to remove gas, and then a surface was polished with a metal bush for use. As the Ni wire, a wire manufactured by Kojundo Chemical Lab. Co., Ltd. with purity 3N and ϕ3mm was used. As the metal piece of Sn, a metal piece manufactured by Furuuchi Chemical Corporation with purity 4N and having a shot shape was used. These raw materials were mixed at a mole ratio of La:Ni:Sn=3:2:7, and then subjected to arc melting to obtain a lump of an alloy having a crystal structure of La₃Ni₂Sn₇. This lump was vacuum-sealed in a quartz tube, and then annealed with a muffle furnace. The annealing was performed by raising a temperature from a room temperature at 300°C/hour, after the temperature reached 680°C, holding this temperature for 48 hours, and then cooling naturally. Furthermore, the lump of the annealed alloy was manually crushed with a mortar for 1 hour, then fed into a zirconia chamber together with zirconia balls, and a ball-mill treatment was performed by using a planetary ball mill at a predetermined rotation rate for a predetermined time. The ball-mill treatment was performed with operations for 5 minutes and intervals for 5 minutes. The powder after the ball-mill treatment was classified with a mesh with 45 µm to remove coarse particles. The produced negative electrode active material (La₃Ni₂Sn₇ powder) had a median diameter (D50) on a volumetric basis of 6.8 µm.

### [Production of Negative Electrode]

The above negative electrode active material and Cu powder were mixed at a mass ratio of 4:6, then compressed to produce a pellet with ϕ7.5 mm and 0.8 mm in height, and this pellet was used for a negative electrode.

### [Production of Counter Electrode]

To determine characteristics of the negative electrode active material, lithium metal (Li), not the above positive electrode, was used as a counter electrode. In a lithium-ion battery, a lithium-transition metal oxide (commonly including a transition metal such as Co, Mn, and Ni) such as LiNiO₂ is commonly used as a positive electrode active material. However, to determine characteristics of the negative electrode active material itself, which was independent on the positive electrode active material, a lithium metal foil was cut to ϕ17 mm for use here as the counter electrode, not the positive electrode active material commonly used for an electrode. Such a method is commonly used for evaluating an active material.

### [Production of Non-Aqueous Electrolyte]

Into a non-aqueous solvent in which ethylene carbonate (EC) and ethyl methyl carbonate (EMC) were mixed at a volume ratio of 1:3, LiPF₆ as an electrolyte salt was dissolved at 1.0 mol/L to prepare a non-aqueous electrolyte.

### [Production of Test Cell]

The above negative electrode and the positive electrode made of the lithium metal foil were disposed opposite to each other across a separator to constitute an electrode assembly, and the electrode assembly was housed in a coin-shaped exterior housing can. The non-aqueous electrolyte was injected into the exterior housing can, and then the exterior housing can was sealed to obtain a coin-shaped test cell (non-aqueous electrolyte secondary battery).

### <Example 2>

A test cell was produced in the same manner as in Example 1 except that, in the production of the negative electrode active material, the time of the ball-mill treatment using the planetary ball mill was lengthened.

### <Comparative Example>

A test cell was produced in the same manner as in Example 1 except that, in the production of the negative electrode active material, the ball-mill treatment using the planetary ball mill was not performed.

Battery capacities (a charge capacity and a discharge capacity) of each of the test cells of Examples and Comparative Example were evaluated by the following method. Table 1 shows the evaluation results. Table 1 also shows a dislocation density of the negative electrode active material and charge-discharge efficiency.

### [Evaluation of Battery Capacities]

The discharge in this evaluation refers to discharge of a battery having a combination of the negative electrode active materials of Examples and Comparative Example and a commonly used positive electrode exemplified by LiNiO₂ and the like. The above discharge, which generally should be referred to as charge because the coin-shaped battery has the negative electrode as a working electrode and the lithium metal (Li) as the counter electrode, is represented with a reverse charge-discharge direction for consisting with charge-discharge behavior of a negative electrode of a battery having a combination of commonly used positive electrode and negative electrode. That is, the charge refers to applying a current for decreasing a potential of a negative electrode being a working electrode, and the discharge refers to applying a current for increasing the potential of the negative electrode being the working electrode.

The battery was charged at a constant current of 2.6 mA until a battery voltage reached 0.01 V, and then discharged at a constant current of 2.6 mA until the battery voltage reached 1.5 V. This charge-discharge cycle was performed twice, and a charge capacity and a discharge capacity at the second cycle were measured. The description about the charge and discharge here is described reversely to the general description, as noted above. That is, the charge refers to applying a current for decreasing a potential of the working electrode until the battery voltage reaches 0 V, and the discharge refers to applying a current for increasing the potential of the working electrode until the battery voltage reaches 1 V.

**[Table 1]**

| | Dislocation density [/cm²] | Battery capacities [mAh/g] | | Charge-discharge efficiency [%] |
|---|---|---|---|---|
| | | Charge capacity | Discharge capacity | |
| Example 1 | 3.0×10²⁰ | 51.1 | 48.7 | 95.4 |
| Example 2 | 0.9×10²⁰ | 135.7 | 132.3 | 97.5 |
| Comparative Example 1 | 1.0×10⁷ | 8.8 | 7.6 | 86.0 |

As shown in Table 1, the test cells of Examples including the negative electrode active material having a dislocation density of greater than or equal to 1×10¹⁵ cm⁻² exhibited higher battery capacities than the test cell of Comparative Example including the negative electrode active material having a dislocation density of less than 1×10¹⁵ cm⁻². In addition, the cells of Examples also exhibited higher charge-discharge efficiency than the cell of Comparative Example 1.

### REFERENCE SIGNS LIST

10 lithium-ion battery, 11 positive electrode, initial end part, 12 negative electrode, 13 separator, 14 electrode assembly, 15 exterior, 16 sealing assembly, 17, 18 insulating plate, 19 positive electrode lead, 20 negative electrode lead, 21 grooved portion, 22 filter, 23 lower vent member, 24 insulating member, 25 upper vent member, 26 cap, 26a opening, 27 gasket.

## Claims

1. A negative electrode active material included in a negative electrode of a lithium-ion battery, wherein
the negative electrode active material is represented by the general formula M₃Me₂X₇, wherein M includes at least one of the group consisting of La and Ca, Me includes at least one element selected from the group consisting of Mn, Ni, Fe, and Co, and X includes at least one element selected from the group consisting of Ge, Si, Sn, and Al, and
a dislocation density of the negative electrode active material is greater than or equal to 1×10¹⁵ cm⁻².

2. A lithium-ion battery, comprising:
a negative electrode including the negative electrode active material according to claim 1;
a positive electrode; and
a non-aqueous electrolyte.

3. The lithium-ion battery according to claim 2, wherein the non-aqueous electrolyte is a solid.
